# EUROPEAN PATENT APPLICATION

(11) **EP 2 322 462 A1**
(43) Date of publication of application: **18.05.2011**
(21) Application number: 10188985.5
(22) Date of filing: 27.10.2010
(51) Int. Cl.: B65H 75/40, B65H 75/44

(54) **Reel Frames for Remote Video Inspection Systems**

(30) Priority: 11.11.2009 US 616225
(71) Applicant: Emerson Electric Co., St. Louis, MO 63136 (US)
(72) Inventor: Babb, Larry, Elyria, OH 44035 (US); Dunkin, Jon R, Elyria, OH 44035 (US)
(74) Representative: Bryn-Jacobsen, Caelia

(57) **Abstract**

A frame assembly (20) for a cable reel includes a lower support frame (28) for rotatably supporting a drum (18) and an upper support member (30) attached to the lower support frame. The upper support member (30) is disposed above the drum (18) and defines a planar top surface when the upper support member is in the working position. The upper support member may be configured to form a folding seat for a user, a drawer for storage and/or a platform for placing a device thereon.

## Description

### FIELD

The present disclosure relates to remote video inspection systems, and more particularly to cable reel frames for remote video inspection systems.

### BACKGROUND

Remote video inspection systems may be used to inspect pipes, and particularly the inside conditions of long pipes, for such issues as defects and obstructions. The long pipes may be heat exchanger pipes, water pipes, gas pipes, electric conduits, fiber optic conduits, bore holes, drain pipes, and underground sewer pipes, for example.

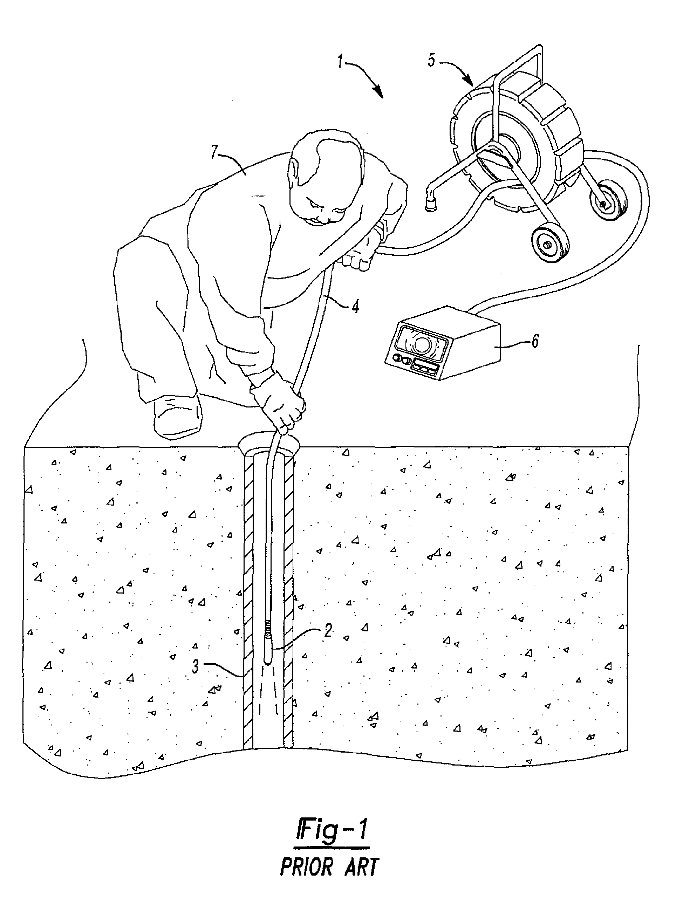

Referring to FIG. 1, a typical remote video inspection system 1 includes a camera 2 for capturing images inside the space being inspected (e.g., long pipes 3), a video cable 4 connected to the camera 2, a cable reel 5 for wrapping and receiving the video cable 4, and a video image display unit 6. The video cable 4 transmits video signals from the camera 2 to the video image display unit 6, which displays the images transmitted from the camera 2. During the inspection process, an operator/user 7 generally kneels or squats as he is manipulating the video cable 4 in the space being inspected and the video image display unit 6 is generally placed near him on the ground.

### SUMMARY

A frame assembly for a cable reel according to the present disclosure includes a lower support frame and an upper support member. The lower support frame rotatably supports a drum. The upper support member is attached to the lower support frame and supports one or more planar platform members.

A cable reel includes a drum, a lower support frame and an upper support member. The lower support frame rotatably supports the drum. The upper support member is mounted to the lower support frame and supports at least one planar platform member.

In one feature, the upper support member may be configured to form a seat, a drawer, a work surface, and/or a mounting location for tools or devices used in the inspection process.

In other features, the upper support member or portions thereof may be movable between a working position and a stowed position. When in the stowed position, the upper support member is disposed at a side of the drum and perpendicular to a shaft that supports the drum. When in the working position, the upper support member is disposed above the drum and parallel to the shaft that supports the drum.

A frame assembly for a cable reel includes a first leg assembly, a second leg assembly spaced from the first leg assembly along a direction parallel to a central axis of the cable reel. A bridge member is disposed between the first leg assembly and the second leg assembly. A shaft extends between the first leg assembly and the second leg assembly for rotatably supporting a drum between the first leg assembly and the second leg assembly. An upper support member is movable between a working position and a stowed position..

This section provides a general summary of the disclosure, and is not a comprehensive disclosure of its full scope or all of its features.

### DRAWINGS

The present invention will become more fully understood from the detailed description and the accompanying drawings, wherein:

FIG. 1 is a perspective view showing the operation of a prior art video inspection system;

FIG. 2A is a perspective view of a remote video inspection system according to one embodiment of the present disclosure;

FIG. 2B is a perspective and partial exploded view of a frame of a cable reel of FIG. 2A;

FIG. 3A is a perspective view of a cable reel according to another embodiment of the present disclosure;

FIG. 3B is a schematic, exploded perspective view of a mounting arrangement for the upper support member of FIG. 3;

FIG. 4A is a perspective view of a cable reel according to another embodiment of the present disclosure;

FIG. 4B is a perspective view of an auxiliary support bracket of FIG. 4A;

FIG. 4C is a schematic, exploded perspective view of a mounting arrangement for the upper support member and auxiliary support bracket of FIG. 4A;

FIG. 4D is a schematic, exploded perspective view of an alternative mounting arrangement for the upper support member and auxiliary support bracket to that of FIG. 4C;

FIG. 5 is a perspective view of an upper support member according to another embodiment of the present disclosure;

FIG. 6 is a perspective view of an upper support bracket according to another embodiment of the present disclosure; and

FIG. 7 is a perspective view of an upper support member according to another embodiment of the present disclosure.

Corresponding reference numerals indicate corresponding parts throughout the several views of the drawings.

### DETAILED DESCRIPTION

First Embodiment

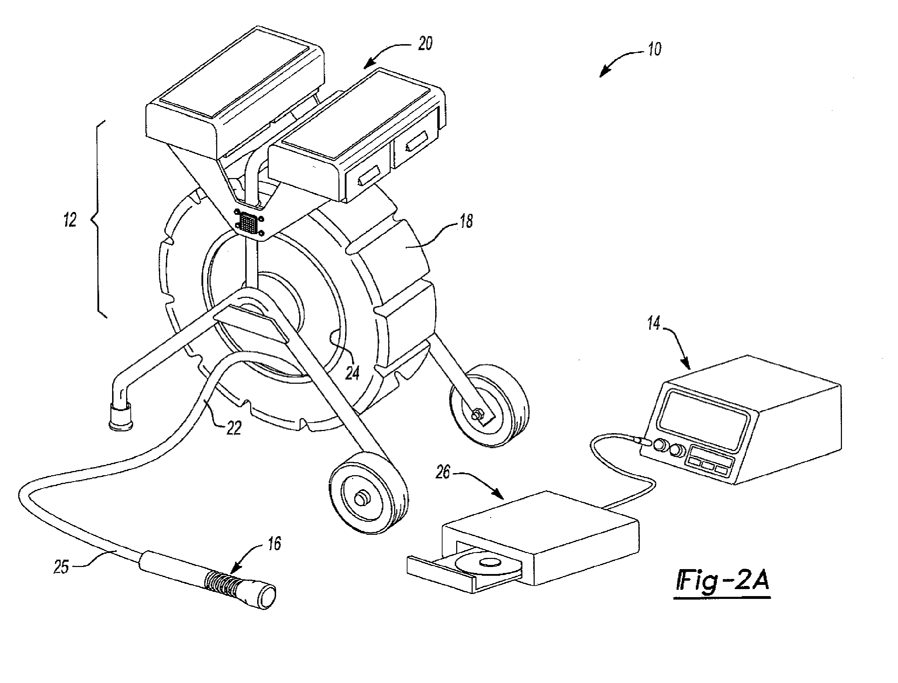

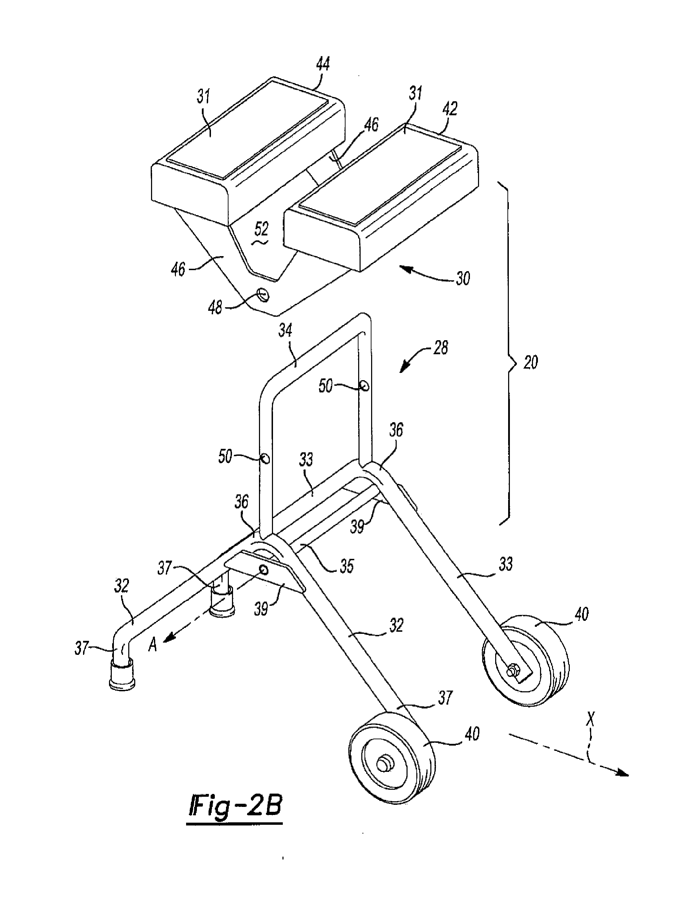

Referring to FIG. 2A, a remote video inspection system 10 according to the present disclosure includes a cable reel 12, a display unit 14, and a camera head 16. The cable reel 12 includes a drum 18, a frame assembly 20, and a cable 22. The drum 18 defines a hollow receiving space 24 for receiving the cable 22 therein. The cable 22 is wrapped around a central axis A (see FIG. 2B) of the drum 18.

The cable 22 has a first end (not shown) secured to the frame assembly 20 and a second end 25 attached to the camera head 16. To inspect a remote space, such as the inside conditions of a long pipe like an underground drain pipe, the camera head 16 and the cable 22 are inserted into the drain pipe. As the cable 22 is inserted, the camera head 16 takes video images of inside conditions of the drain pipe. The camera head 16 has a generally cylindrical shape and may have a small diameter to be inserted into drain pipes of any size.

The cable 22 may define an inner channel in which electric wires are received. Images taken by the camera head 16 may be transmitted by digital or analog video signals, such as composite NTSC video signals, through the electric wires in the cable 22. The display unit 14 may be a video image display unit for displaying images taken by the camera head 16. The display unit 14 may be connected to the cable 22 and thus the camera head 16 through a USB interface (not shown) attached to the frame assembly 20. Alternatively, the inspection system may be configured so that the camera head 16 may be operable to transmit digital or analog video signals wirelessly to the display unit 14 which can receive and process the signals for display.

Optionally, a recorder 26 may be provided to record inspections. The recorder 26 may be a light-weight DVD recorder to allow for easy transportation and may have a built-in microphone that provides sound recording during the inspection.

Referring to FIG. 2B, the frame assembly 20 includes a lower support frame 28 for rotatably supporting the drum 18 and an upper support member 30 mounted to the lower support frame 28. The upper support member 30 defines at least one planar top surface 31, which may be used as a multi-purpose platform to facilitate inspection work.

The lower support frame 28 includes a pair of first legs 32, a pair of second legs 33, and a bridge member 34 connecting the pair of first legs 32 to the pair of second legs 33. The pair of first legs 32 and the pair of second legs 33 are spaced along a direction parallel to the central axis of the drum 18. The first legs 32 and the second legs 33 each include a connecting end 36 and a free end 37. The first legs 32 are connected at their connecting ends 36 to form a first leg assembly and define a substantially inverted V shape. The second legs 33 are connected at their connecting ends 36 to form a second leg assembly and define a substantially inverted V shape. The bridge member 34 is disposed between the first and second leg assemblies and connects the connecting ends 36. The bridge member 34 defines a substantially inverted U shape.

The first and second leg assemblies each include a cross member 39 between the first legs 32 or the second legs 33. A shaft 35 is disposed between and attached to the cross members 39 for rotatably supporting the drum 18. The drum 18 is disposed between the first and second leg assemblies and below the bridge member 34. The bridge member 34 may function as a handle for carrying the cable reel 12.

Each leg assembly includes a rolling wheel 40. The rolling wheels 40 facilitate movement of the cable reel 12. While only one pair of rolling wheels 40 are shown, it is understood and appreciated that rolling wheels 40 may be mounted to all legs 32 and 33.

While each leg assembly is shown to include two legs 32 or 33, it is understood and appreciated that each leg assembly can have only one leg or can have any configurations known in the art to support the frame on the ground.

The upper support member 30 is attached to the lower support frame 28 and disposed above the drum 18. The upper support member 30 defines a first platform member 42, a second platform member 44, and a pair of connecting bracket members 46 for connecting the first platform member 42 and the second platform member 44. The connecting bracket members 46 each define a first aperture 48 aligned with a corresponding second aperture 50 in the bridge member 34. The upper support member 30 may be attached to the bridge member 34 by any conventional fastening means, such as with a nut and bolt or screw, for example.

The first platform member 42 and the second platform member 44 may each be configured to define a planar top surface 31, which can function as a multi-purpose work platform. For example, the display unit 14 and the recorder 26 may be placed on one or both of the planar top surfaces 31 during the inspection process. In addition, the upper support member 30 may be configured to function as a seat for a user/operator of the remote video inspection system. For example, the user/operator may sit on the first platform member 42 and the display unit 14 may be placed on the second platform member 44. The user, therefore, may comfortably be seated while viewing the display unit 14 that is placed on the second platform member 44.

The first platform member 42, the second platform member 44, and the connecting bracket members 46 define a space 52 therebetween. When the upper support member 30 is mounted to the lower support frame 28, the bridge member 34 extends through the space 52 to enable a user/operator to use the bridge member 34 as a carrying handle for the cable reel 12 even though the upper support member 30 is attached above the drum 18.

Optionally, a hook and loop fastener device, such as Velcro^{®}, may be provided on the top planar surfaces 31 of either or both of the first and second platform members 42, 44 to enable devices, such as the display unit 14 and recorder 26, having a corresponding hook and loop fastener device, to be secured to the upper support member 30.

While the first platform member 42 and the second platform member 44 are shown to be aligned along a rotational direction X of the drum 18, it is understood and appreciated that the first platform member 42 and the second platform member 44 may be arranged to be aligned along a direction parallel to the central axis A of the drum 18. In other words, the first platform member 42 and the second platform member 44 may be disposed on the sides of the drum 18.

Second Embodiment

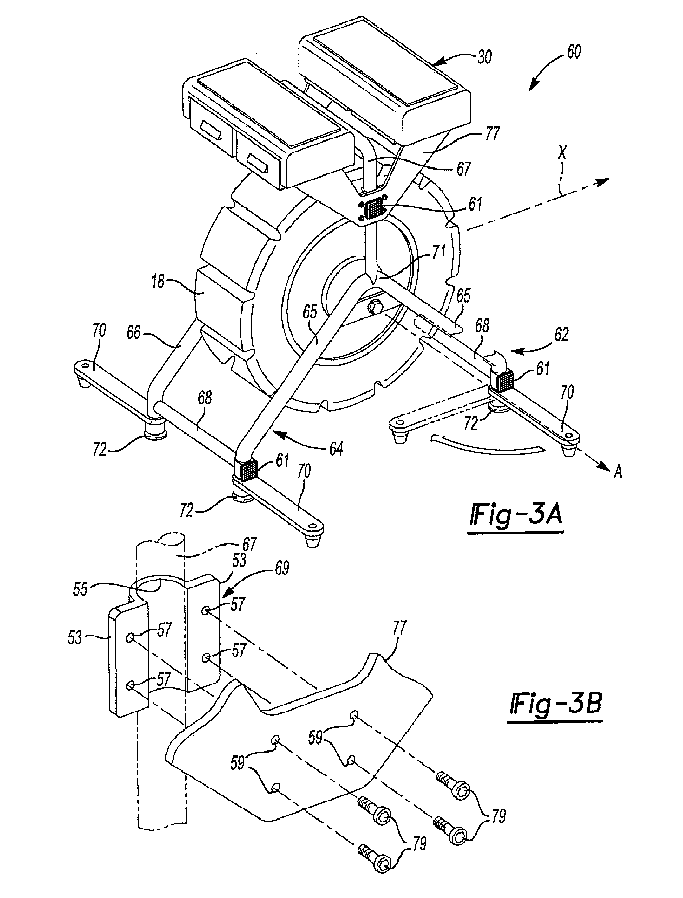

Referring to FIG. 3A, a cable reel 60 according to a second embodiment of the present disclosure includes a drum 18 and a frame assembly 62 for rotatably supporting the drum 18. The frame assembly 62 includes an upper support member 30 and a lower support frame 64. The frame assembly 62 is similar to that of the first embodiment.

The lower support frame 64 includes a pair of first legs 65, a pair of second legs 66, a bridge member 67, a pair of second cross members 68, and a plurality of leg extensions 70. The first legs 65 and the second legs 66 each include a connecting end 71 and a free end 72. The bridge member 67 is connected to the connecting ends 71 of the first legs 65 and the second legs 66. The second cross members 68 are attached to the free ends 72 of one of the first legs 65 and one of the second legs 66.

The plurality of leg extensions 70 are pivotably mounted to the free ends 72 of the first legs 65 and the second 66 for improving stability of the lower support frame 64. When not in use, the leg extensions 70 may be pivoted inward to a retracted or stowed position (see FIG. 3A). When in use, the leg extensions 70 may be pivoted outward to an extended or use position such that they are aligned with the adjacent one of the second cross members 68 to improve the stability of the lower support frame 64. When the leg extensions are in their stowed position, it is also possible to position lower support frame 64 on its side, so that it is supported by a plurality of foot pads 61 located on the lower support frame 64 and the upper support member 30.

FIG. 3B shows an arrangement for securing the upper support member 30 to the lower support frame 64. A mounting bracket 69 has flanges 53 on either side of a central recess portion 55 that is shaped to fit around the bridge member 67 of the lower support frame 64. A plurality of apertures 57 in the flanges 53 are aligned with corresponding apertures 59 in the connecting bracket member 77 of the upper support member 30 when it is located on the opposite side of the bridge member 67 from the mounting bracket 69. A fastener 79, such as a threaded fastener, secure the mounting bracket 69 to the upper support member 30, attaching it to the lower support frame 64.

Third Embodiment

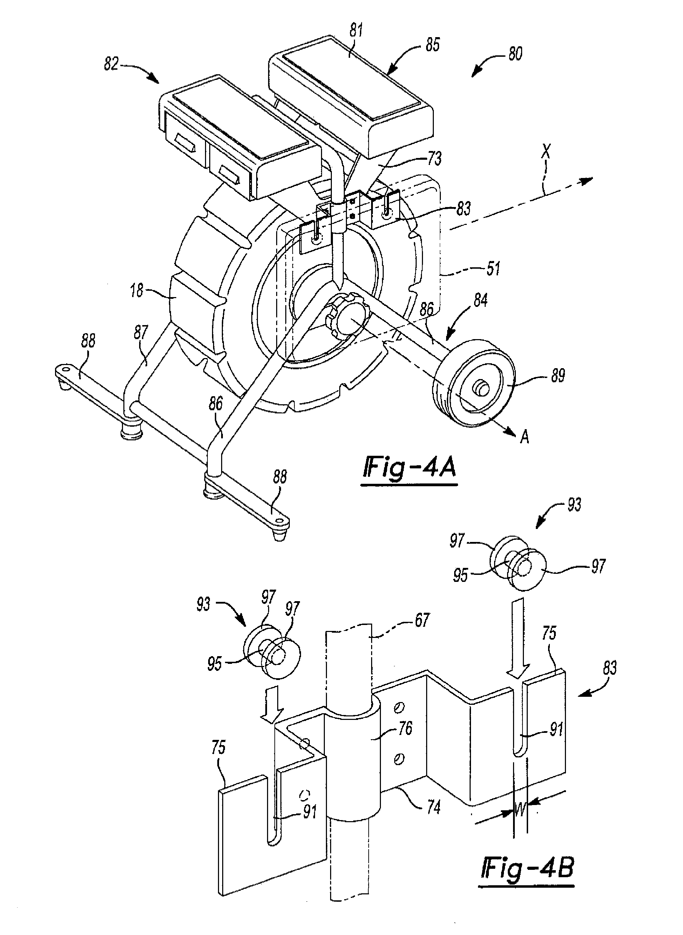

Referring to FIG. 4A, a cable reel 80 according to a third embodiment of the present disclosure includes a drum 18 and a frame assembly 82 for supporting the drum 18. The frame assembly 82 includes a lower support frame 84 and an upper support member 85. The lower support frame 84 is similar to the lower support frame 64 of the second embodiment, except that the lower support frame 84 includes the combination of leg extensions 88 and rolling wheels 89 and that the upper support member 85 includes an auxiliary support bracket 83.

More specifically, the lower support frame 84 includes a pair of first legs 86 and a pair of second legs 87 that are positioned on opposite sides of the drum 18. One of the first legs 86 includes a leg extension 88 and the other one of the first legs 86 includes a rolling wheel 89. Similarly, one of the second legs 87 includes a leg extension 88 and the other one of the second legs 87 includes a rolling wheel 89. The upper support member 85 includes a work platform 81 and an auxiliary support bracket 83. The auxiliary support bracket 83 is mounted at the side of the drum 18 and is operable to attach an auxiliary device 51, such as a laptop computer, display unit, or other apparatus, to the cable reel 80. The work platform 81 is supported by a connecting bracket member 73, which also facilitates mounting the upper support member 85 to the lower support frame 84.

Referring to FIG. 4B, the auxiliary support bracket 83 includes a central mounting portion 74 and two spaced apart, L-shaped flanges 75 on either side of the central mounting portion 74. The central mounting portion 74 defines a recess portion 76 that is shaped to fit around the bridge member 67 of the lower support frame 64. The flanges 75 each define a relatively narrow, vertical channel 91 having a width W that is cooperable with a corresponding mounting feature 93 that can be included on or attached to an auxiliary device.

For example, an auxiliary device 51, such as a laptop computer (see, e.g., FIG. 4A), can include one or two spaced-apart mounting features 93 on its base. The mounting feature 93 can take the form of a generally cylindrically-shaped member having a central portion 95 positioned between two outer portions 97. The diameter of the central portion 95 is smaller than the diameters of the outer portions 97. In addition, the diameter of the central portion 95 is smaller than the width W of the channels 91 of the flanges 75, and the diameters of the outer portions 97 are greater than the width W of the channels 91. The central portion 95 has a length that is greater than the thickness of the auxiliary support bracket 83. With such a configuration, the cylindrically-shaped mounting features 93 can slide into the channels 91 of the flanges 75 of the auxiliary support bracket 83 to secure the laptop computer to the cable reel 80, regardless of the position of the work platform 81. When secured to the cable reel 80, the laptop computer is disposed at a side of the drum 18 with its primary top and bottom surfaces oriented perpendicular to the central axis A of the drum 18. The auxiliary support bracket 83 enables a user/operator to carry the cable reel 80 and the laptop computer 51 as one unit. Although described with reference to a generally cylindrically-shaped member, the mounting feature can take any suitable geometry.

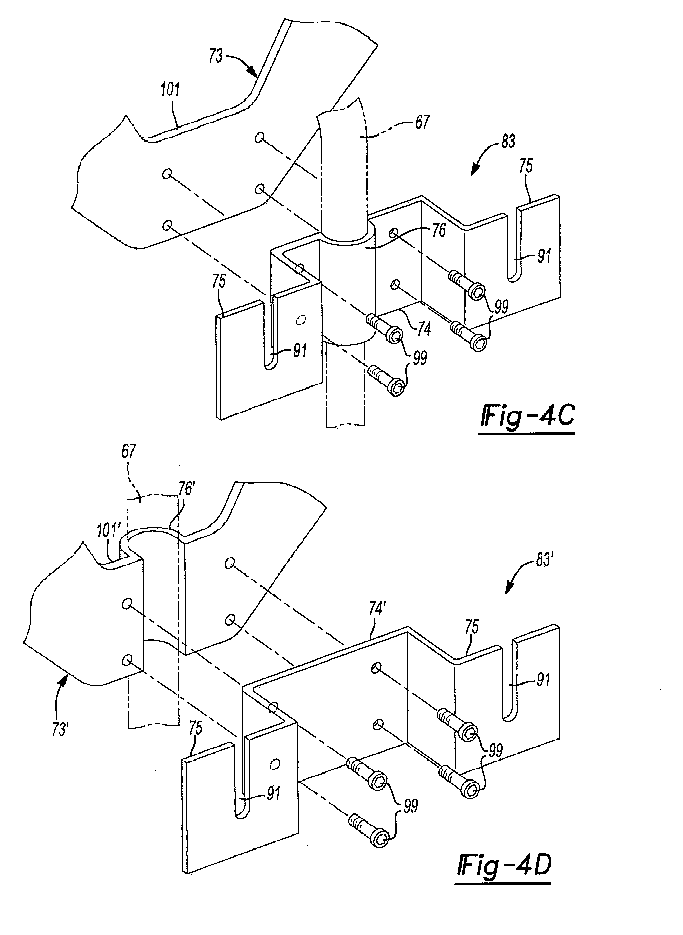

Referring to FIG. 4C, the connecting bracket member 73 of the work platform 81 and the auxiliary support bracket 83 are mounted to the bridge member 67 by fasteners 99. When mounted to the bridge member 67, the central mounting portion 74 of the auxiliary support bracket 83 and a central mounting portion 101 of the connecting member 73 oppose each other on opposite sides of the bridge member 67 which is received in the circular portion 76.

Referring to FIG. 4D, an alternative connecting member 73' of the work platform 81 and the auxiliary support bracket 83' is shown. A circular portion 76' for surrounding a portion of the bridge member 67 is provided at the connecting member 73', instead of the central mounting portion 74' of the auxiliary support bracket 83'. It is understood and appreciated that the connecting member 73' and the auxiliary support bracket 83' may each be provided with a semi-circular portion so that the semi-circular portions jointly form a circular portion to surround a portion of the bridge member 67.

Fourth Embodiment

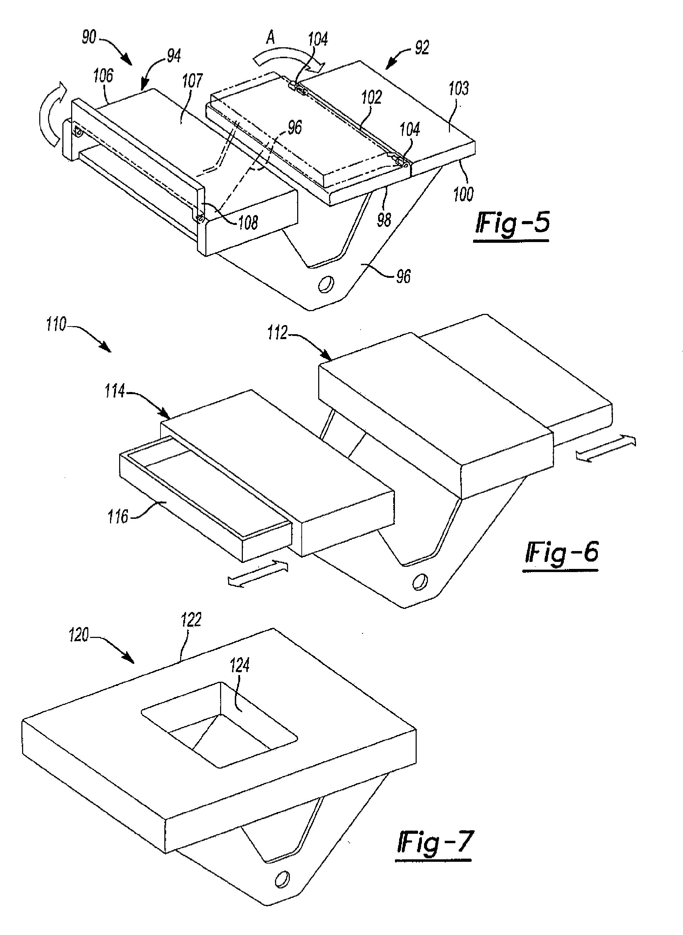

Referring to FIG. 5, an upper support member 90 according to a fourth embodiment of the present disclosure may be configured to provide a folding seat and/or a work platform. More specially, the upper support member 90 includes a first member 92, a second member 94, and a pair of connecting members 96 connecting the first member 92 and the second member 94.

The first member 92 may function as a folding seat and may include a first portion 98 and a second portion 100. The second portion 100 is pivotably mounted to an edge 102 of the first portion 98 by a hinge 104 between a folding position (shown in dashed lines) and an extended position (shown in solid lines). In the folding position, the second portion 100 is placed immediately above the first portion 98. The second portion 100 may be pivoted around the hinge 104 as indicated by arrow A to the extended position. In the extended or working position, the first portion 98 and the second portion 100 are disposed in the same plane to jointly define a planar top surface 103 to allow a user to sit thereon.

The second member 94 may function as a work platform and may include a plate member 106 and a flange 108. The flange 108 extends from the plate member 106 at an angle relative to the plate member 106. For example, the flange 108 may extend perpendicularly from the plate member 106. The flange 108 may be foldably mounted to the plate member 106. During use, the flange 108 may be pivoted toward a planar top surface 107 of the plate member 106 so that the flange 108 disposed at an angle relative to the plate member 106. The planar top surface 107 may be used to support a device used in the inspection process, such as the display unit and the recorder. The flange 108 may prevent the device from dropping off the upper support member 90.

While not shown in the drawings, it is understood and appreciated that the first portion 98 and the second portion 100 of the first member 92 may be attached in a telescopic manner. For example, the first portion 98 may define a receiving space and the second portion 100 may be received in the receiving space in the folding position and pulled away from the first portion in the extended position. Similarly, the flange 108 of the second plate member may be received in a slot of the plate member 106. During use, the flange 108 may be pulled up from the slot to be disposed at an angle relative to the plate member 106.

Fifth Embodiment

Referring to FIG. 6, an upper support member 110 according to a fifth embodiment of the present disclosure is configured to function as a folding seat, a platform and at least one drawer. The upper support member 110 may include a first member 112 used as a folding seat and a second member 114 used as a work platform. The second member 114 may include a drawer 116 providing storage space, such as for inspection tools used during the inspection work.

Sixth Embodiment

Referring to FIG. 7, an upper support member 120 according to a seventh embodiment is shown to have a single-piece plate member 122. The plate member 122 defines an opening 124 to allow the bridge member 34 or 67 of the lower support frame 28, 64 or 84 to extend through.

According to the present disclosure, the frame assembly for a cable reel includes an upper support member attached to the lower support frame. The upper support member defines a top planar surface and may be configured as a folding seat for a user, a drawer for storage, a platform for placing thereon a device used in the inspection work, such as a computer, an image display unit, a recorder, or the like. In addition, the upper support member may provide a mounting location for tools or other devices used with the inspection system or in the inspection process, such as a power supply, batteries, electronic components like a device for recording images and/or video from the inspection, or a docking station for providing connectivity between the inspection system and a computer, for example.

The upper support member may include an auxiliary support bracket. The cable reel frame assembly with an upper support member is especially advantageous when the inspection of the drain pipes is conducted in a rugged environment where no planar or clean surface is found to place the devices used in the inspection work.

This description is merely exemplary in nature and, thus, variations that do not depart from the gist of the disclosure are intended to be included within the scope of the disclosure. Further areas of applicability of the present invention will become apparent from the detailed description provided hereinafter. It should be understood that the description and specific examples, while indicating the preferred embodiment(s) of the invention, are intended for purposes of illustration only and are not intended to limit the scope of this disclosure.

## Claims

1. A frame assembly for a cable reel comprising:
a lower support frame for rotatably supporting a drum comprising:
a first leg assembly;
a second leg assembly spaced from the first leg assembly;
a bridge member disposed between the first and second leg assemblies;
the drum being rotatably supported between the first and second leg assemblies; and
an upper support member mounted to the lower support frame and comprising at least one planar platform member.

2. The frame assembly of Claim 1 wherein the upper support member is mounted to the lower support frame and is movable between a stowed position and a working position.

3. The frame assembly of Claim 2 wherein the upper support member is disposed at a side of the drum when in the stowed position and above the drum when in the working position.

4. The frame assembly of Claim 1 wherein the upper support member is configured to function as at least one of a seat, a work platform, and a drawer.

5. The frame assembly of Claim 1 wherein the at least one planar platform member includes a first member and a second member which define a space therebetween.

6. The frame assembly of Claim 5 wherein the first member is configured as a seat and the second member is configured as a work platform.

7. The frame assembly of Claim 5 wherein the bridge member extends through the space.

8. The frame assembly of Claim 1 wherein each leg assembly defines an inverted V shape.

9. The frame assembly of Claim 1 wherein the bridge member defines a U shape.

10. The frame assembly of Claim 5 wherein the upper support member further comprises at least one connecting member disposed between the first member and the second member and connecting the upper support member to the lower support frame.

11. The frame assembly of Claim 1 wherein the upper support member is a single-piece component.

12. The frame assembly of Claim 11 wherein the upper support member defines an opening to enable a portion of the lower support frame to extend therethrough.

13. The frame assembly of Claim 1 further comprising an auxiliary support bracket disposed on a side of the lower support frame for engaging a mounting feature of a device.

14. The frame assembly of Claim 13 wherein the auxiliary support bracket includes a central mounting portion mounted to the lower support frame and a pair of flanges at sides of the central mounting portion, the flanges each defining a channel for receiving the mounting feature of the device.
